# EUROPÄISCHE PATENTSCHRIFT

(11) **EP 1 045 414 B1**
(45) Veröffentlichungstag und Bekanntmachung des Hinweises auf die Patenterteilung: **12.04.2006**
(21) Anmeldenummer: 99109825.2
(22) Anmeldetag: 19.05.1999
(51) Int. Cl.: H01H 31/12

(54) **Sicherungslasttrennschalter in Leistenbauform für NH-Sicherungen**
Load break switch with low-voltage high-power fuses
Disjoncteur-sectionneur à fusibles de haute puissance basse tension

(30) Priorität: 16.04.1999 DE 19917403
(43) Veröffentlichungstag der Anmeldung: 18.10.2000
(73) Patentinhaber: Jean Müller GmbH Elektrotechnische Fabrik, 65343 Eltville (DE)
(72) Erfinder:
(74) Vertreter: Quermann, Helmut

(56) Entgegenhaltungen:
- EP-A- 0 890 971
- DE-A- 2 800 277
- DE-A- 3 812 504
- DE-U- 7 431 660
- DE-U- 8 813 157
- DE-U- 9 310 753
- DE-U- 29 512 870
- DE-U- 29 612 450

## Beschreibung

Die Erfindung betrifft einen Sicherungslasttrennschalter in Leistenbauform für Niederspannungs-Hochleistungs-Sicherungen (NH-Sicherungen).

Ein derartiger Sicherungslasttrennschalter ist aus der Praxis bekannt. Er weist ein Leistenunterteil und ein Leistenoberteil auf. Das Leistenunterteil ist in einem Schaltkasten auf Stromschienen befestigt. Der Strom wird im Leistenunterteil über drei Stromzuführungen zugeführt, die mit Kontaktelementen verbunden sind. Weitere Kontaktelemente sind mit drei Stromabgängen verbunden. Im Leistenoberteil sind Kunststoffabdeckungen gehalten, die bei miteinander verbundenem Leistenunterteil und Leistenoberteil die Kontaktelemente umgeben und hierbei einen zu den Zungen der Kontaktelemente führenden Schlitz freigeben. Im Leistenoberteil sind drei Sicherungsdeckel schwenkbar gelagert, in denen jeweils ein NH-Sicherungseinsatz gelagert ist. Beim Schließen des jeweiligen Sicherungsdeckels wird die zugeordnete NH-Sicherung mit ihren Kontaktmessern in die diesen zugeordneten Kontaktelemente eingeschoben und hiermit der Schalter, bezogen auf die zugeordnete Phase, geschlossen. - Der bekannte Sicherungslasttrennschalter hat sich in der Praxis durchaus bewährt. Dennoch gewährleistet er keinen Berührschutz, insbesondere dann nicht, wenn der Schalter unter Spannung montiert wird und demzufolge das Leistenoberteil vom Leistenunterteil abgenommen ist.

Es ist Aufgabe der vorliegenden Erfindung, einen Sicherungslasttrennschalter sowohl unter funktionellem als auch unter konstruktivem Gesichtspunkt zu optimieren. Der Sicherungslasttrennschalter soll insbesondere unter Spannung montiert werden können. Der Schalter soll ferner vielfältige Funktionen mittels weniger Varianten gewährleisten. Es soll der Einsatz marktüblicher Erdungsgarnituren auch bei schaltbaren Leistungen möglich sein. Der Berührschutz soll erweitert sein und es sollen alle Funktionen für ein Schienensystem aus gängigem Flachkupfer bereitgestellt werden. Das Dokument DE 88 13 157V offenbart einen Schalter gemäss den Oberbegriff des Anspruchs 1.

Die Erfindung schlägt einen Sicherungslasttrennschalter in Leistenbauform für NH-Sicherungen gemäss dem Anspruch 1.

Gemäß der Erfindung sind die Funktionen des Schalters weitgehend in das Leistenunterteil integriert. Die Funktion des Leistenoberteils ist im wesentlichen auf die Funktion der Elemente zum Halten und Einschwenken der Sicherungen beschränkt. Selbstverständlich besteht die Möglichkeit, zusätzliche Funktionen in das Leistenoberteil zu integrieren. Dies ändert aber nichts daran, daß insbesondere die Funktion des Berührschutzes vom Leistenunterteil übernommen wird, so daß bei vom Leistenunterteil abgenommenem Leistenoberteil an dem Leistenunterteil unter Spannung montiert werden kann.

Die Vorrichtung zum Einsetzen der Sicherungen kann so gestaltet sein, daß das Einsetzen der Sicherungen auf unterschiedliche Art und Weise erfolgt. Vorteilhaft sind die Vorrichtungen zum Einsetzen der Sicherungen als Einschwenkvorrichtungen ausgebildet. Es ist gleichfalls denkbar, das Einsetzen der Sicherungen durch eine Parallelverschiebung der Sicherungen zu bewerkstelligen.

Es wird als besonders vorteilhaft angesehen, wenn das Leistenunterteil zusätzlich Einrichtungen zur Unterstützung der Lichtbogenlöschung aufweist.

Der Berührschutz zum Abdecken der freiliegenden, spannungsführenden Teile des Unterteils ist beispielsweise als Abdeckhauben für die Sicherungen und die Kontakte zur Aufnahme der Sicherungen ausgebildet. Die Zuordnung des Berührschutzes mit einer Löschkammer zum Leistenunterteil führt dazu, daß in Kombination mit einer Aufhängevorrichtung eine Leiste unter Spannung durch Fachpersonal auf ein Schienensystem montiert werden kann. Es wird entsprechend der Schienenbreite eine Aufhängevorrichtung montiert und die Leiste eingehängt. Dann wird die Leiste festgeschraubt, beispielsweise mittels eines isolierten Werkzeuges, insbesondere unter Verwendung von Innensechskantschrauben. Dann werden die Abgangsleitungen montiert, das Oberteil aufgesetzt und es erfolgt die Inbetriebnahme.

Infolge der Funktionserweiterung des Leistenunterteils kann das Leistenoberteil erheblich vereinfacht werden. Es reicht aus, wenn es nur aus einem Basiskörper besteht, der aus einem oder mehreren Teilen zusammengesetzt ist. Das Leistenoberteil weist beispielsweise Mittel zum Gewährleisten eines erweiterten Berührschutzes und/oder Lagerstellen für die Einschwenkvorrichtungen für die Sicherungen auf. Des weiteren können im Lageroberteil zusätzliche Abdeckungen, insbesondere Anschlußraumhauben gelagert sein. Das Leistenoberteil kann im Frontbereich eine Fläche aufweisen, die der Aufnahme einer Produktinformation dient.

Für den Wechsel von Anschluß oben auf Anschluß unten besteht die Möglichkeit, die Kontakthauben mit einfachen Handgriffen zu drehen. Eine Fehlmontage ist nicht möglich.

Der Berührschutz des Leistenunterteiles, der mit einer Löschkammer versehen ist, kann auf unterschiedliche Art und Weise gestaltet sein. Denkbar ist beispielsweise die Integrierung eines Bleches, insbesondere U-Bleches, eines Blechpaketes, Rippen aus gasendem Kunststoffmaterial oder eine Kombination vorgenannter Merkmale.

Weitere Merkmale der Erfindung sind in der Beschreibung der Figuren und den Figuren selbst dargestellt, wobei bemerkt wird, daß alle Einzelmerkmale und alle Kombinationen von Einzelmerkmalen erfindungswesentlich sind.

In den Figuren ist die Erfindung anhand eines Ausführungsbeispieles dargestellt, ohne hierauf beschränkt zu sein. Es stellt dar:

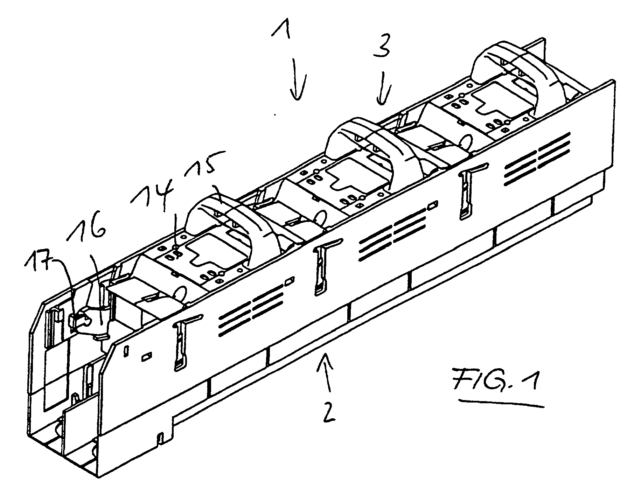

- Figur 1: eine räumliche Ansicht des Sicherungslasttrennschalters in Leistenbauform bei geschlossenem Schalter,

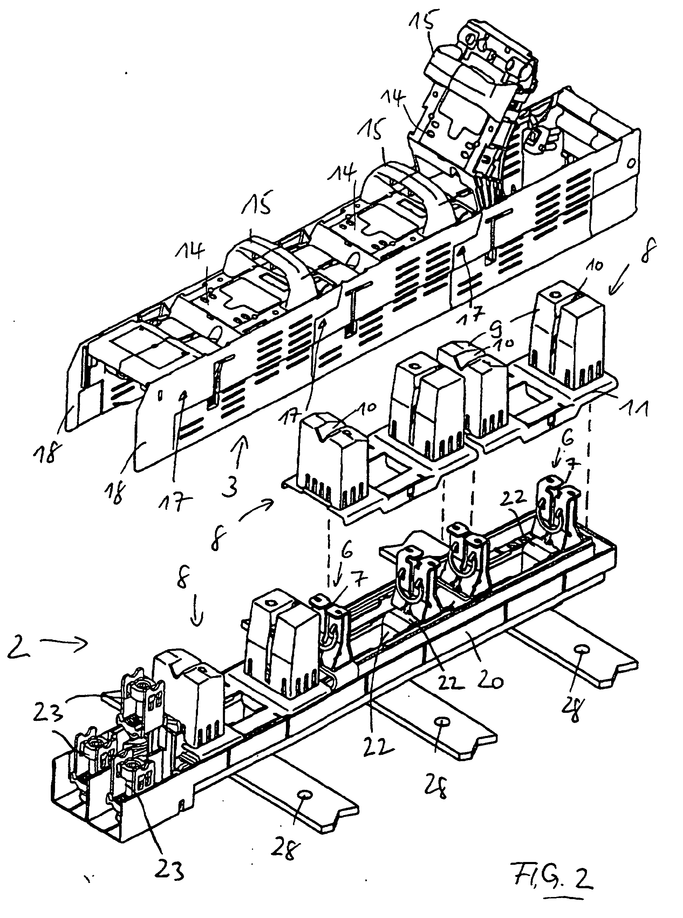

- Figur 2: den Sicherungslasttrennschalter gemäß Figur 1 in einer Explosionsdarstellung, schräg von oben gesehen,

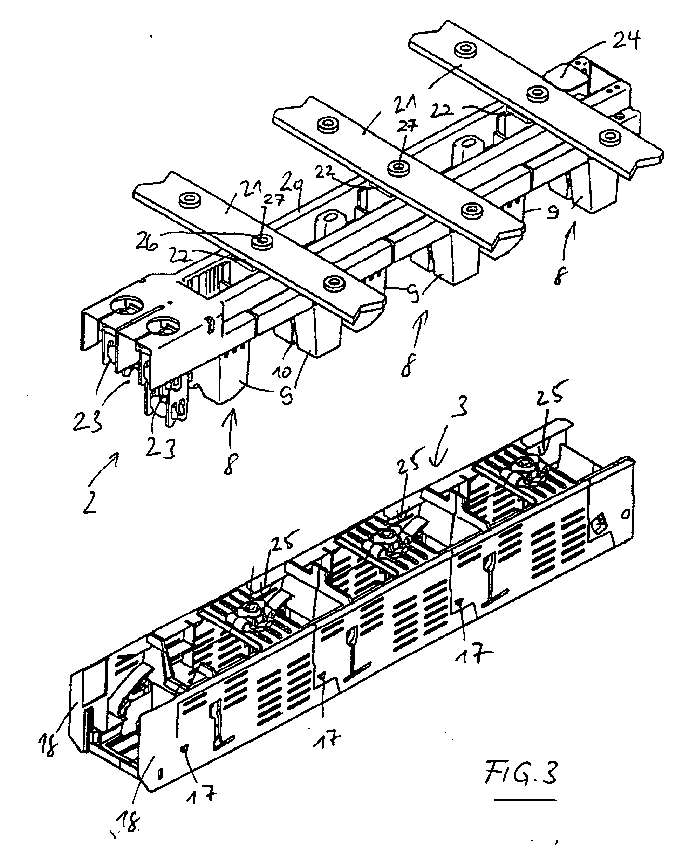

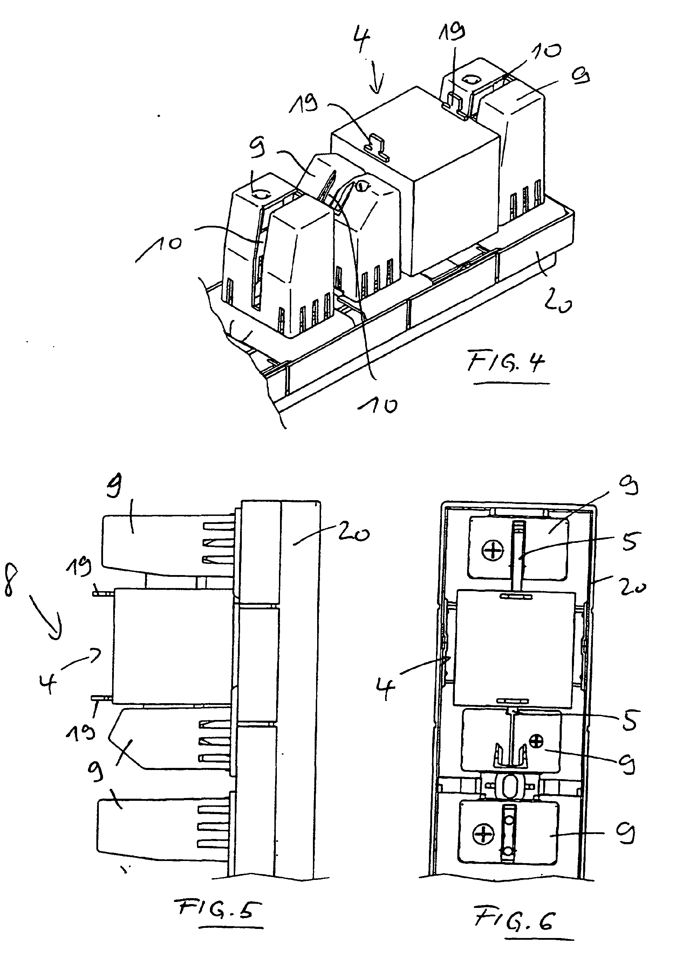

- Figur 3: den Sicherungslasttrennschalter gemäß Figur 1 in einer Explosionsdarstellung, schräg von unten gesehen,

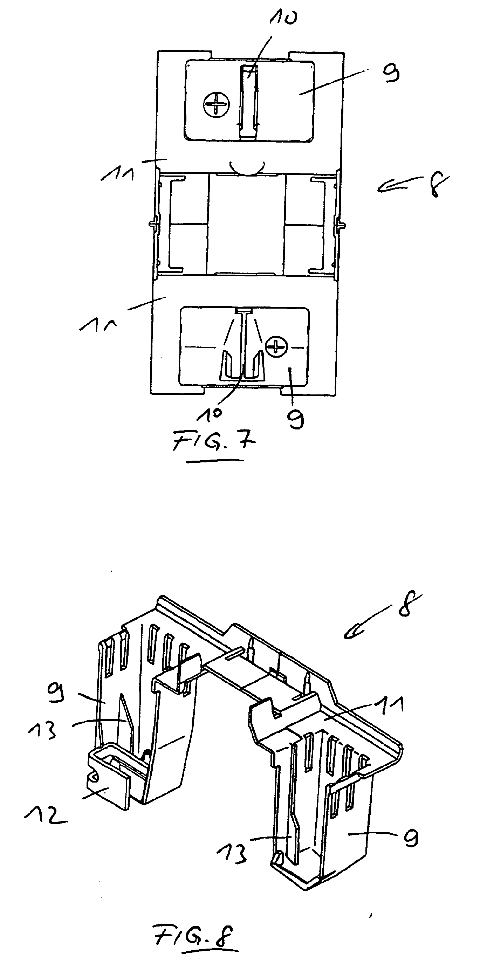

- Figur 4: einen Bereich des Leistenunterteils in einer räumlichen Ansicht,

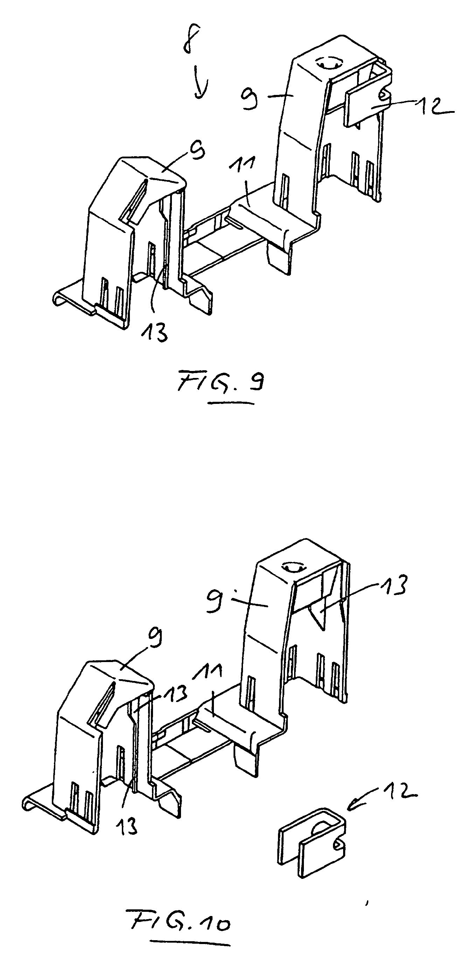

- Figur 5: eine Seitenansicht des in Figur 4 gezeigten Bereiches des Leistenunterteils,
- Figur 6: eine Draufsicht des in Figur 4 gezeigten Bereiches des Leistenunterteils,
- Figur 7: eine Draufsicht des der jeweiligen Sicherung zugeordneten Berührschutzes des Leistenunterteils,
- Figur 8: eine räumliche Ansicht des in Figur 7 gezeigten, teilweise dargestellten Berührschutzes, von unten gesehen,
- Figur 9: den Berührschutz nach Figur 8, in einer räumlichen Ansicht veranschaulicht, schräg von oben gesehen und
- Figur 10: eine Ansicht des Berührschutzes gemäß Figur 9, allerdings bei entferntem U-Blech.

Der Sicherungslasttrennschalter 1 ist im wesentlichen durch ein Leistenunterteil 2 und ein Leistenoberteil 3 gebildet. Zum Absichern dreier Phasen sind drei NH-Sicherungen 4 vorgesehen. Die beiden Kontaktmesser 5 der jeweiligen NH-Sicherung 4 sind in Kontaktelemente 6 einsetzbar, die Schlitze 7 zur Aufnahme der Kontaktmesser 5 aufweisen. Jedes Kontaktelementpaar ist mittels eines Berührschutzes 8 gesichert. Er weist zwei haubenförmige Abdeckelemente 9 mit Schlitz 10 sowie eine zwischen den Abdeckhauben angeordnete Grundplatte 11 auf. Der jeweilige Berührschutz 8 ist aus dem Stand der Technik bekannt, beispielsweise aus der EP 0 890 971 A2. Gemäß der Erfindung ist der Berührschutz 8 bzw. es sind die drei als Berührschutz 8 fungierenden Elemente, die die sechs Kontaktelemente 6 abdecken, Bestandteil des Leistenunterteils 2 und verbleiben beim Lösen des Leistenoberteils 3 vom Leistenunterteil 2 am Leistenunterteil 2.

Das Leistenunterteil 2 ist in einem Schaltkasten auf Sammelschienen 21 befestigt. Der Strom wird im Bereich des Leistenunterteiles 2 über drei Z-förmige Anschlußwinkel 22 zugeführt. Diese sind jeweils einerseits mit einer Sammelschiene 21 verbunden, insbesondere verschraubt, andererseits mit einem Kontaktelement 6 jeder NH-Sicherung 4 verbunden. Zum Verbinden des jeweiligen Anschlußwinkels 22 mit der zugeordneten Sammelschiene 21 ist diese mit Bohrungen 28 versehen. Von innerhalb des Leistenunterteiles 2 wird eine Schraube 27 durch eine Bohrung im Anschlußwinkel 22 und der Sammelschiene 21 gesteckt und mit einer auf der abgewandten Seite der Sammelschiene angeordneten Mutter 26 verschraubt. Das andere Kontaktelement 6 der jeweiligen NH-Sicherung ist mit Stromabgängen verbunden, die Anschlußklemmen 23 aufweisen. Diese dienen dem Klemmen von nicht gezeigten Anschlußleitungen. Als Montagehilfe ist das Leistenunterteil 2 schließlich mit einer aus Kunststoff bestehenden Kralle 24 versehen, die vor dem Verschrauben der Anschlußwinkel 22 mit den Sammelschienen 21 dem Zweck dient, das Leistenunterteil definiert bezüglich des Sammelschienensystems zu halten.

Aufgrund der Ausbildung des Leistenunterteils, dessen Berührschutz 8 bei der Montage alle spannungsführenden Teile mindestens handrückensicher abdeckt, kann in Kombination mit einer Aufhängevorrichtung die Leiste unter Spannung durch das Fachpersonal auf dem Schienensystem montiert werden. Zunächst wird die Aufhängevorrichtung entsprechend der Schienenbreite montiert, dann die Leiste eingehängt und festgeschraubt, wobei ein isoliertes Werkzeug Verwendung findet. Anschließend werden die Abgangsleitungen montiert, das Leistenoberteil 3 aufgesetzt, das Leistenoberteil 3 und das Leistenunterteil 2 durch Drehen von drei Verriegelungseinrichtungen 25, die im Leistenoberteil gelagert sind, miteinander verbunden und schließlich der Sicherungslasttrennschalter in Betrieb genommen.

Den Abdeckelementen 9 kommt nicht nur die Funktion eines Berührschutzes, sondern auch die Löschfunktion zu. Sie bilden eine Löschkammer. Diese weist ein symmetrisch zum zugeordneten Kontaktmesser 5 angeordnetes U-förmig gebogenes Blech 12 auf, das aufgrund seines Materials eine hohe Wärmeleitung ermöglicht und damit die durch einen Lichtbogen erzeugte Wärme schnell abführen kann. Zusätzlich zum U-Blech 12 weist das jeweilige Abdeckelement 9 innen Kunststoffrippen 13 auf, über die Verdampfungswärme abgezogen wird. Darüber hinaus kann ein Löschblechpaket vorgesehen sein, das neben den Vorteilen eines U-Bleches die Lichtbogenteilung bewirkt. Schließlich sind Kombinationen der vorgenannten Einrichtungen zur Lichtbogenlöschung denkbar.

Im Leistenoberteil 3 sind entsprechend den drei Phasen drei Klappen 14, mit jeweils zugeordnetem Handgriff 15, schwenkbar gelagert. Die jeweilige Klappe 14 weist zwei in Abstand zueinender angeordnete Schwenkbügel 16 auf, die in Lagern 17 der Seitenwände 18 des Leistenoberteils 3 gehalten sind. Die Klappen 14 sind insbesondere in Art eines erweiterten Berührschutzes gestaltet, das heißt sie nehmen eine solche Fläche ein, daß bei geschlossenem Schalter keine Möglichkeit besteht, in den Raum zwischen Leistenunterteil 2 und Leistenoberteil 3 hineinzugreifen. In den Klappen 14 sind in bekannter Art und Weise die NH-Sicherungen 4 im Bereich deren Grifflaschen 19 gehalten. Beim Schließen der jeweiligen Klappe wird die NH-Sicherung 4 mit ihren beiden Kontaktmessern 5 in die diesen zugeordneten Kontaktelemente 6 eingeschwenkt.

Während des Wechsels von Anschluß oben auf Anschluß unten sind die Kontakthauben 8 mit einfachen Handgriffen drehbar. Dies deshalb, weil zum Schließen des Schalters die NH-Sicherungen 4 eingeschwenkt werden und demzufolge der Berührschutz im Bereich der beiden Abdeckelemente 9 des Berührschutzes 8 unterschiedlich gestaltet ist. Durch Drehen der Kontakthauben um 180°, das heißt - bei Verwendung einer Steckverbindung - Herausziehen des Berührschutzes 8 aus dem Basiskörper 20 des Leistenunterteils 2, Schwenken um 180° und erneutem Einstecken des Berührschutzes 8 in den Basiskörper 20 kann der Wechsel des Anschlusses von oben nach unten auf einfache Art und Weise erfolgen.

## Patentansprüche

1. Sicherungslasttrennschalter (1) in Leistenbauform für NH-Sicherungen (4) mit folgenden Merkmalen:
ein Leistenunterteil (2), das aufweist
- Mittel (22, 6, 23) für die Stromführung und Kontaktgabe zu den Sicherungen (4),
- Mittel (26, 27, 22) zum Befestigen des Schalters auf einem Schienensystem (21, 21, 21),
- Mittel (23) zum Klemmen von Anschlussleitungen,
- Mittel (8) zum Gewährleisten eines Berührschutzes,
ein Leistenoberteil (3), in dem Vorrichtungen (14, 16) zum Einsetzen der Sicherungen (4) gelagert sind, **dadurch gekennzeichnet, dass** die Mittel (8) zum Gewährleisten eines Berührschützes, zum Wechseln des Anschlusses des Schalters von oben auf unten oder umgekehrt drehbare Abdeckelemente (9, 11) für die Mittel (6) für die Kontaktgabe zu den Sicherungen (4) aufweisen.

2. Schalter nach Anspruch 1, wobei die der jeweiligen Sicherung (4) zugeordneten Abdeckelemente (9, 11) unterschiedlich gestaltet sind.

3. Schalter nach Anspruch 1 oder 2, **dadurch gekennzeichnet, dass** jedes einer Sicherung (4) zugeordnete Paar von Kontaktelementen (6) mittels eines Berührschutzes (8) abdeckbar ist, der zwei haubenförmige Abdeckelemente (9, 11) mit Schlitzen (10) für die Kontaktmesser (5) der Sicherung (4) sowie eine zwischen den Abdeckelementen (9, 11) angeordnete Grundplatte (10) aufweist.

4. Schalter nach einem der Ansprüche 1 bis 3, wobei die Vorrichtungen (14, 16) zum Einsetzen der Sicherungen (4) als Einschwenkvorrichtungen ausgebildet sind.

5. Schalter nach einem der Ansprüche 1 bis 4, wobei das Leistenunterteil (2) zusätzlich Einrichtungen (12, 13) zur Unterstützung der Lichtbogenlöschung aufweist.

6. Schalter nach Anspruch 5, wobei die Einrichtungen (12, 13) zur Unterstützung der Lichtbogenlöschung in den Berührschutz (8) integriert sind und als U-förmig gebogenes Blech (12), Löschblechpaket, Kunststoffrippen (12) des Berührschutzes (8) oder als Kombination hiervon ausgebildet sind.

7. Schalter nach einem der Ansprüche 1 bis 6, wobei das Leistenoberteil (3) Mittel zum Gewährleisten eines erweiterten Berührschutzes aufweist.

8. Schalter nach einem der Ansprüche 1 bis 7, wobei das Leistenoberteil (3) Lagerstellen (17) für die Einschwenkvorrichtungen (14, 16) für die Sicherungen (4) aufweist.

9. Schalter nach einem der Ansprüche 1 bis 8, wobei im Leistenoberteil (3) zusätzliche Abdeckungen, insbesondere Anschlussraumhauben gelagert sind.

## Revendications

1. Interrupteur-sectionneur à fusible (1) construit sous la forme d'une barrette pour des fusibles à haut pouvoir de coupure (4), possédant les caractéristiques suivantes :
une partie inférieure de barrette (2) qui présente :
- des moyens (22, 6, 23) pour la conduction électrique et la mise en contact des fusibles (4),
- des moyens (26, 27, 22) pour la fixation de l'interrupteur sur un système de barres (21, 21, 21),
- des moyens (23) pour le serrage de lignes de raccordement,
- des moyens (8) pour garantir une protection contre les contacts accidentels ;
une partie supérieure de barrette (3) dans laquelle sont montés des dispositifs (14, 16) pour l'insertion des fusibles, **caractérisé en ce que** les agents (8) pour garantir une protection contre les contacts accidentels présentent des éléments de recouvrement (9, 11) pour les moyens (6) destinés à la mise en contact des fusibles, aptes à effectuer une rotation de haut en bas ou inversement pour le changement du raccordement de l'interrupteur.

2. Interrupteur selon la revendication 1, dans lequel les éléments de recouvrement (9, 11) attribués au fusible respectif (4) présentent des configurations différentes.

3. Interrupteur selon la revendication 1 ou 2, **caractérisé en ce que** chaque paire d'éléments de protection contre les contacts accidentels (6) attribuée à un fusible (4) peut être recouverte à l'aide d'un dispositif de protection contre les contacts accidentels qui présente deux éléments de recouvrement (9, 11) en forme de coquille comportant des fentes (10) pour les lames de contact (5) du fusible (4), ainsi qu'une plaque de base (10) disposée entre les éléments de recouvrement (9, 11).

4. Interrupteur selon l'une quelconque des revendications 1 à 3, dans lequel les dispositifs (14, 16) pour l'insertion des fusibles (4) sont réalisés sous la forme de dispositifs d'insertion par pivotement.

5. Interrupteur selon l'une quelconque des revendications 1 à 4, dans lequel la partie inférieure de barrette (2) présente en outre des mécanismes (12, 13) pour soutenir l'extinction d'arc.

6. Interrupteur selon la revendication 5, dans lequel les mécanismes (12, 13) pour soutenir l'extinction d'arc sont intégrés dans le dispositif (8) de protection contre les contacts accidentels et sont réalisés sous la forme d'une tôle pliée en U (12), d'un paquet de tôles de soufflage, de nervures en matière synthétique (12) du dispositif de protection contre les contacts accidentels (8) ou encore sous la forme d'une combinaison des formes de réalisation précitées.

7. Interrupteur selon l'une quelconque des revendications 1 à 6, dans lequel la partie supérieure de barrette (3) présente des moyens pour garantir une protection amplifiée contre les contacts accidentels.

8. Interrupteur selon l'une quelconque des revendications 1 à 7, dans lequel la partie supérieure de barrette (3) présente des endroits de montage (17) pour les dispositifs d'insertion par pivotement (14, 16) destinés aux fusibles (4).

9. Interrupteur selon l'une quelconque des revendications 1 à 8, dans lequel des recouvrements supplémentaires, en particulier des capots pour des espaces d'entrée de raccordement sont montés dans la partie supérieure de barrette (3).

## Claims

1. Fuse switch-disconnector (1) in strip form for low-voltage high-breaking-capacity fuses (4), having the following features:
a strip bottom-portion (2) which has
- means (22, 6, 23) for carrying current to and making contact with the fuses (4),
- means (26, 27, 22) for fixing the switch-disconnector to a system of rails (21, 21, 21),
- means (23) for clamping connecting conductors,
- means (8) for ensuring protection against electric shock, a strip top-portion (3) in which are mounted devices (14, 16) for inserting the fuses (4), **characterised in that** the means (8) for ensuring protection against electric shock have, for changing the connection of the switch-disconnector from top to bottom or vice versa, rotatable covering members (9, 11) for the means (6) for making contact with the fuses (4).

2. Switch-disconnector according to claim 1, wherein the covering members (9, 11) associated with the respective fuses (4) are of different forms.

3. Switch-disconnector according to claim 1 or 2, **characterised in that** each pair of contact elements (6) associated with a fuse (4) can be covered by means of an anti-shock protector (8) which has two hood-like covering members (9, 11) having slots (10) for the contact-blades (5) of the fuse (4) and a base-plate (10) arranged between the covering members (9, 11).

4. Switch-disconnector according to one of claims 1 to 3, wherein the devices (14, 16) for inserting the fuses are in the form of pivoting-in devices

5. Switch-disconnector according to one of claims 1 to 4, wherein the strip bottom-portion (2) has, in addition, means (12, 13) for assisting arc-quenching.

6. Switch-disconnector according to claim 5, wherein the means (12, 13) for assisting arc-quenching are incorporated in the anti-shock protector (8) and are in the form of sheet metal (12) bent into a U-shape, a block of arc-splitter plates, plastics ribs (12) on the anti-shock protector (8), or a combination thereof.

7. Switch-disconnector according to one of claims 1 to 6, wherein the strip top-portion (3) has means for ensuring extended protection against electric shock.

8. Switch-disconnector according to one of claims 1 to 7, wherein the strip top-portion has bearing points (17) for the pivoting-in devices (14, 16) for the fuses (4).

9. Switch-disconnector according to one of claims 1 to 8, wherein additional covers, and in particular hoods for the terminal housings, are mounted in the strip top-portion (3).
